# EUROPÄISCHE PATENTANMELDUNG

(11) **EP 0 836 013 A2**
(43) Veröffentlichungstag der Anmeldung: **15.04.1998**
(21) Anmeldenummer: 97116421.5
(22) Anmeldetag: 20.09.1997
(51) Int. Cl.: F16B 13/08

(54) **Befestigungselement mit Spreizelement**

(30) Priorität: 12.10.1996 DE 19642201; 12.12.1996 DE 19651697
(71) Anmelder: fischerwerke Artur Fischer GmbH & Co. KG, D-72178 Waldachtal (DE)
(72) Erfinder: Fischer, Artur, Prof. Dr.-Ing. E.h., 72178 Waldachtal (DE)

(57) **Zusammenfassung**

Es wird ein Befestigungselement (1) mit einem Spreizbereich vorgeschlagen, der durch einen Längsschlitz (5) und einem auf der Grundfläche (6) des Längsschlitzes verschiebbar aufsitzende Spreizelement (7) gebildet ist. Das Spreizelement (7) weist einen Anschlag (10) auf, der am vorderen Stirnende (11) des Befestigungselementes (1) anliegt. Die Gestaltung des erfindungsgemäßen Befestigungselementes ermöglicht sowohl die kostengünstige Herstellung als auch ein sicheres Nachspreizen bei einer durch Rißbildung entstehenden Bohrlocherweiterung.

## Beschreibung

Die Erfindung betrifft ein Befestigungselement mit am hinteren Ende angeordnetem Haltemittel zur Befestigung eines Gegenstandes an einem Bauteil gemäß dem Oberbegriff des Anspruches 1.

Aus der DE 44 33 918 A1 ist ein Befestigungselement bekannt, das im Bereich seiner vorderen Stirnseite einen Spreizbereich hat, der durch einen Längsschlitz und einem auf der Grundfläche des Längsschlitzes verschiebbar aufsitzenden Spreizelement gebildet ist. Das Spreizelement liegt auf der zum vorderen Stirnende ansteigenden Grundfläche des Längsschlitzes auf, wobei die mit Zähnen versehene Außenfläche des Spreizelementes den Schaft des Befestigungselementes radial überragt. Tritt nach dem Verankern des bekannten Befestigungselementes durch Rißbildung eine Bohrlocherweiterung ein, verschiebt sich der Schaft des Befestigungselementes aufgrund einer an ihm angreifenden Zuglast gegenüber dem in der Wandung des Bohrloches festsitzenden Spreizelement, sodaß durch die zum vorderen Stirnende ansteigende Grundfläche des Längsschlitzes die Bohrlocherweiterung ausgeglichen wird. Das bekannte Befestigungselement ist daher für eine Verwendung in der Zugzone geeignet, bei der durch Rißbildung Bohrlocherweiterungen eintreten können.

Beim Eintreiben des bekannten Befestigungselementes in ein Bohrloch eines Bauteils muß sich das Spreizelement zur Vermeidung einer Vorspreizung am Schaft des Befestigungselementes abstützen. Zu diesem Zweck ist die zum hinteren Stirnende des Befestigungselementes weisende Begrenzung des Längsschlitzes als quer zur Längsachse stehende Anschlagfläche ausgebildet. Dadurch ist zum einen für das Einbringen des Längsschlitzes in den Schaft ein aufwendiges Fertigungsverfahren erforderlich, und zum anderen erfährt der Schaft des Befestigungselementes im Bereich der Anschlagfläche durch Kerbwirkung und entsprechende Tiefe des Längsschlitzes eine Schwächung, die zu einer Reduzierung des Haltewertes des bekannten Befestigungselementes führt. Ferner wird beim Eintreiben des Befestigungselementes durch die vordere und innerhalb des Längsschlitzes sich befindende Stirnkante des Spreizelementes Bohrmehl von der Wandung des Bohrloches abgeschabt, das in den Längsschlitz eindringt und das Spreizelement im Längsschlitz derart verklemmen kann, daß die Verschiebbarkeit und damit das Nachspreizen bei einer Bohrlocherweiterung durch Rißbildung nicht mehr gewährleistet oder beeinträchtigt ist.

Der Erfindung liegt die Aufgabe zugrunde, das bekannte Befestigungselement in der Weise zu verbessern, daß es einfacher und kostengünstiger herstellbar ist und ein sicheres Nachspreizen bei Bohrlocherweiterungen durch Rißbildung erreicht wird.

Die Lösung dieser Aufgabe wird durch die im Anspruch 1 angegebenen Merkmale erreicht. Durch den kreisbogenförmigen Auslauf der Grundfläche des Längsschlitzes und der Auflagefläche des Spreizelementes werden Kanten vermieden, die das Gleiten des Spreizelementes behindern könnten. Die Herstellung des Längsschlitzes kann nun vorteilhafterweise durch einen Scheibenfräser erfolgen, dessen Radius dem Radius des Auslaufes entspricht.

Um zu verhindern, daß sich das Spreizelement beim Eintreiben des Befestigungselementes in das Bohrloch in Richtung zum hinteren Stirnende hin verschiebt und damit eine Vorspreizung auslöst, weist das Spreizelement einen Anschlag auf, der am vorderen Stirnende des Befestigungselementes anliegt. Durch diese Gestaltung liegt die Schabkante außerhalb des Längsschlitzes, sodaß kein oder nur geringe Mengen Bohrmehl beim Eintreiben des Befestigungselementes in den Längsschlitz eindringt und unter Umständen das Spreizelement im Längsschlitz verkeilt. Durch die Abstützung des Spreizelementes über den an der vorderen Stirnseite des Befestigungselementes anliegenden Anschlag wird ferner eine Stauchung des Spreizelementes beim Eintreiben in das Bohrloch vermieden, was einen höheren Eintreibwiderstand verursachen würde.

Zur besseren Verkrallung des Spreizelementes in der Wandung des Bohrloches kann die Außenfläche des Spreizelementes mit Zähnen versehen sein, die den Schaft radial überragen.

Über ein verschiebbares Halteelement, beispielsweise einen Kunststoffclip, wird das Spreizelement im Längsschlitz festgehalten, um ein unbeabsichtigtes Herausfallen des Spreizelementes aus dem Längsschlitz zu vermeiden. Der Kunststoffclip umgreift mit seinen beiden Schenkeln geringfügig den Halbkreisquerschnitt des Schaftes, sodaß über die Schenkel die Haltefunktion für das Spreizelement erreicht wird. Um ein Verdrehen des Halteelementes auf dem Schaft zu verhindern, ist in weiterer Ausgestaltung im Zenit des Kunststoffclips und an seiner Innenfläche eine das Spreizelement umfassende Längsnut angeordnet.

Um die leichte Verschiebbarkeit des Spreizelementes auch bei Extrembedingungen sicherzustellen, kann auf der Grundfläche des Längsschlitzes und/oder auf der Auflagefläche des Spreizelementes ein Gleitmittel aufgebracht sein.

Gute Gleiteigenschaften sind auch dadurch erreichbar, daß das Spreizelement aus einem härteren Werkstoff als der Schaft besteht.

In der Zeichnung sind Ausführungsbeispiele der Erfindung dargestellt. Es zeigen:
- Figur 1: das Befestigungselement mit in einem Längsschlitz einliegendem Spreizelement,
- Figur 2: einen Querschnitt des Befestigungselementes im Bereich des Halteelementes entsprechend der Schnittlinie A-A
- Figur 3: einen Teillängsschnitt des Befestigungselementes von Figur 1, und
- Figur 4: das im Bohrloch verankerte Befestigungselement.

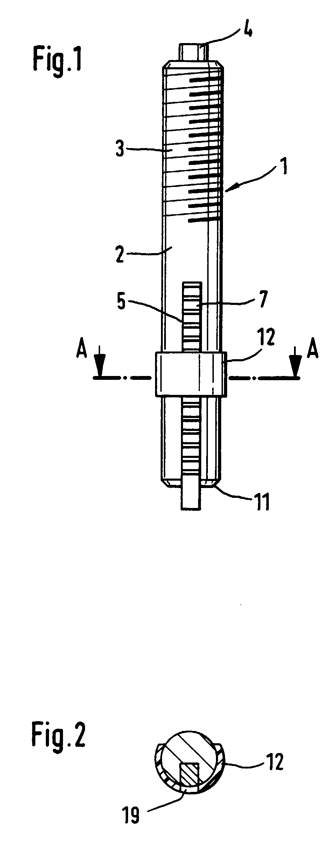

Das in Figur 1 bis 3 dargestellte Befestigungselement 1 hat einen Schaft 2 mit einem Außengewinde 3 am hinteren Ende 4 und einen Spreizbereich, der durch einen Längsschlitz 5 und einem in diesem Längsschlitz einliegenden Spreizelement 7 gebildet ist. Die Grundfläche 6 des Längsschlitzes 5 sowie die Auflagefläche des Spreizelementes 7 weisen einen kreisbogenförmigen Auslauf aus. Der vordere Bereich des Spreizelementes 7 ist zur Bildung des Anschlages 10 hakenförmig ausgebildet und liegt am vorderen Stirnende 11 des Befestigungselementes 1 an. Das in dem Längsschlitz 5 einliegende Spreizelement 7 wird durch ein verschiebbares Halteelement 12 gehalten. Das Halteelement 12 ist als Kunststoffclip ausgebildet, dessen Schenkel den Schaft 2 des Befestigungselementes über den Halbkreisquerschnitt hinaus umgreifen. Zur Arretierung des Clips gegen Verdrehen weist dieser eine den Überstand des Spreizelementes 7 umfassende Längsnut 19 auf.

Das Spreizelement 7 weist an seiner Außenfläche sägezahnförmig ausgebildete Zähne 8 auf. Die Zähne 8 überragen etwa um die Zahnhöhe den Schaft 2. Auf der Grundfläche 6 des Längsschlitzes 5 und/oder auf der Auflagefläche des Spreizelementes 7 kann ein Gleitmittel aufgebracht sein. Dieses Gleitmittel sorgt auch bei extremen Bedingungen für eine Verschiebbarkeit zwischen dem Spreizelement 7 und dem Schaft 2 des Befestigungselementes 1. Ein günstiges Gleitverhalten kann auch dadurch erreicht werden, daß das Spreizelement 7 aus einem härteren Werkstoff, beispielsweise Stahl, als der Schaft 2 besteht.

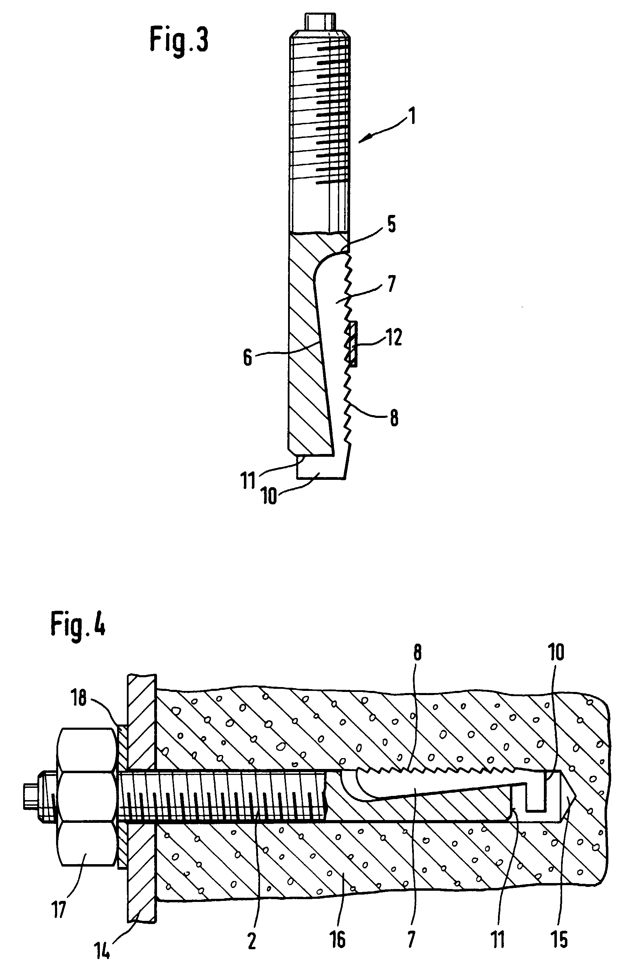

Figur 4 zeigt das in einem Bohrloch 15 eines Bauteils 16 verankerte Befestigungselement 1, auf dessen Gewinde 3 zur Befestigung des Gegenstandes 14 eine Mutter 17 aufgeschraubt ist. Unter der Mutter 17 ist eine Unterlagscheibe 18 angeordnet. Durch das Aufschrauben entsteht eine auf das Befestigungselement 1 wirkende Zugkraft, die das Spreizelement 7 mit dem Schaft 2 im Bohrloch durch die dabei auftretende axiale Verschiebung verkeilt. Eine axiale Verschiebung mit dem gleichen Effekt tritt auch ein, wenn durch Rißbildung eine Bohrlocherweiterung entsteht. Durch die zunehmende radiale Verkeilung des Spreizelementes wird die Bohrlocherweiterung ausgeglichen.

## Patentansprüche

1. Befestigungselement (1) mit am hinteren Ende (4) angeordnetem Haltemittel (3) zur Befestigung eines Gegenstandes an einem Bauteil und einem vom vorderen Stirnende (11) ausgehenden und in Längsrichtung über einen Teil der Länge seines Schaftes (2) sich erstreckenden Spreizbereich, der durch einen Längsschlitz (5) und einem auf der Grundfläche (6) des Längsschlitzes verschiebbar aufsitzenden Spreizelement (7) gebildet ist, **dadurch gekennzeichnet**, daß das Spreizelement (7) einen Anschlag (10) aufweist, der am vorderen Stirnende (11) des Befestigungselementes (1) anliegt.

2. Befestigungselement nach Anspruch 1, **dadurch gekennzeichnet**, daß der Anschlag (10) am Spreizelement (7) hakenförmig ausgebildet ist.

3. Befestigungselement nach Anspruch 1, **dadurch gekennzeichnet**, daß die Außenfläche des Spreizelementes (7) mit Zähnen (8) versehen ist, die den Schaft (2) radial überragen.

4. Befestigungselement nach Anspruch 1, **dadurch gekennzeichnet**, daß an dem Spreizelement (7) ein verschiebbares Halteelement (12) angreift, welches das Spreizelement im Längsschlitz (5) festhält.

5. Befestigungselement nach Anspruch 4, **dadurch gekennzeichnet**, daß das Halteelement (12) als Kunststoffclip ausgebildet ist, dessen Schenkel den Schaft des Befestigungselementes über den Halbkreisquerschnitt hinaus umgreifen.

6. Befestigungselement nach Anspruch 5, **dadurch gekennzeichnet**, daß im Zenit des Kunststoffclips (12)und an seiner Innenfläche eine das Spreizelement (7) umfassende Längsnut (19) angeordnet ist.

7. Befestigungselement nach Anspruch 1, **dadurch gekennzeichnet**, daß auf der Grundfläche (6) des Längsschlitzes (5) und/oder auf der Auflagefläche des Spreizelementes (7) ein Gleitmittel aufgebracht ist.

8. Befestigungselement nach Anspruch 1, **dadurch gekennzeichnet**, daß das Spreizelement (7) aus einem härteren Werkstoff als der Schaft (2) besteht.
